Europäisches Patentamt

European Patent Office

Office européen des brevets

(19)

(11) Veröffentlichungsnummer : **0 041 106**
**B1**

(12) **EUROPÄISCHE PATENTSCHRIFT**

(45) Veröffentlichungstag der Patentschrift :
05.09.84

(51) Int. Cl.³ : **B 04 C   5/04**, B 04 C   5/13,
**B 04 C   5/30**

(21) Anmeldenummer : 81101936.3

(22) Anmeldetag : 16.03.81

(54) Entstauberzyklon, insbesondere mit doppelter Abscheidung.

(30) Priorität : 29.05.80 HU MA001346

(43) Veröffentlichungstag der Anmeldung :
09.12.81 Patentblatt 81/49

(45) Bekanntmachung des Hinweises auf die Patenterteilung : 05.09.84 Patentblatt 84/36

(84) Benannte Vertragsstaaten :
AT BE CH DE FR GB IT LI LU NL SE

(56) Entgegenhaltungen :
DE-B- 1 292 478
FR-A- 2 281 791
GB-A- 1 155 424
US-A- 1 408 693
US-A- 2 349 831
US-A- 3 199 269

(73) Patentinhaber : **Malom- és Sütöipari Kutatointézet**
**Dombo Vári u. 5-7**
**H-1117 Budapest XI (HU)**

(72) Erfinder : **Sòlymos, Lászlo, Dipl.-Maschineningenieur**
**Labanc u. 16**
**Budapest II (HU)**

(74) Vertreter : **Patentanwälte Viering & Jentschura**
**Steinsdorfstrasse 6**
**D-8000 München 22 (DE)**

**Beschreibung**

Die Erfindung betrifft ein Entstauberzyklon, insbesondere mit doppelter Abscheidung. Zyklone dieser Art weisen in an sich bekannter Weise ein Zyklongehäuse und ein Tauchrohr auf, die entlang einer gemeinsamen Achse angeordnet sind und einen Abscheidungsraum bzw. einen Entladeraum einschließen, wobei das Tauchrohr in den Abscheidungsraum hineinragt und der Abscheidungsraum mit einem Einlauf verbunden ist, dessen eine Seite dem Tauchrohr zugekehrt ist.

Wie bekannt, bestehen insbesondere aus ökologischen Gründen strenge Vorschriften, die der in der Atmosphäre entladenen zugelassenen Staubmenge eine Grenze setzen.

Zur Entstaubung von staubhaltiger Luft werden u. a. Abscheiderzyklone verwendet, die zur Abscheidung die Zentrifugalkraft nutzbar machen und verhältnismäßig billig sind. Sie sind auch durch ihren einfachen Aufbau und Betrieb ausgezeichnet.

Um die Wirksamkeit der Entstaubung zu fördern, ist es bereits vorgeschlagen worden, mehrere Zyklone in Reihe zu schalten. Messungen haben aber gezeigt, daß der Abscheidegrad des stromabwärts liegenden zweiten Zyklons bereits wesentlich geringer ist, als bei dem in der Reihe ersten Zyklon, was auf eine erheblich geringere Staubbeladung des in der Reihe zweiten Zyklons zurückzuführen ist. Dabei summieren sich die Luftwiderstände der beiden Zyklone, was aus energetischen Gründen unerwünscht ist.

Es ist deshalb vorgeschlagen worden, das Tauchrohr des Zyklons als zweiten Zyklon einzusetzen. Der an der Wand des Tauchrohrs angereicherte Staub wird zwecks einer Abscheidung mittels desselben Ventilators aus dem Tauchrohr, das ohnehin einen Verlust darstellt, in den Abscheidungsraum des Zyklons zurückgeleitet. Auf diese Weise wird in einer einzigen Einrichtung eine zweistufige Abscheidung bewirkt. Dies kann dadurch erreicht werden (US-A-2 349 831), daß in der Wand des Tauchrohres eine oder mehrere Öffnungen ausgebildet sind, die durch Einbiegen eines Teils der Tauchrohrwand in das Tauchrohr hinein entsteht und von dem durch den tangentialen Einlauf des Zyklons eintretenden staubbeladenen Primärluftstrom überstrichen wird. Dabei besteht jedoch die Gefahr, daß ein Teil des Primärluftstroms unmittelbar durch die Öffnung in das Tauchrohr eintritt.

Ferner ist es zur Erhöhung des Abscheidungsgrades bekannt (DE-B-1 292 478), durch einen Zutrittsspalt hindurch, der an der radialen Innenseite des tangentialen Einlaufs im radialen Abstand von dem Tauchrohr ausgebildet ist, eine Hilfsgutmasse aus gröberen Feststoffteilchen wie Fasern, an denen die Feinststaubteilchen agglomerieren, in den Abscheidungsraum zuzuführen. Dadurch wird in dem Abscheidungsraum am Eintritt der staubbeladenen Luft und der Hilfsgutmasse kontinuierlich ein mit der Luftströmung in dem Abscheidungsraum umlaufender, radial nach außen wandernder Filterschleier aufgebaut, der die Mitnahme der Feinststaubteilchen in den radial von außen nach innen in das Tauchrohr strömenden Reinluftstrom verhindert. Allerdings wird durch die Zuführung einer zusätzlichen Hilfsgutmasse der Gesamtenergieverbrauch erhöht.

Durch die Erfindung wird die Aufgabe gelöst, eine Erhöhung des Abscheidegrades von Entstaubungszyklonen im allgemeinen und von Zyklonen mit doppelter Abscheidung im besonderen zu erreichen, wobei der Zyklon mit hohem Abscheidegrad bei niedrigen Gestehungskosten und geringem Energieverbrauch bereits in einer einzigen Stufe den Abscheidegrad von in Reihe geschalteten einfachen Zyklonen erreicht und auf vielen Industriegebieten die ökologischen Vorschriften erfüllt.

Der Erfindung liegt die Erkenntnis zugrunde, daß durch eine sekundäre Luftmenge, die mit hoher Geschwindigkeit über einen am Zyklon ausgebildeten Zutrittsspalt aus dem Umgebungsraum zugeführt wird, die in der durch den Einlauf des Zyklons eintretenden Luft vorhandenen Staubkörnchen an die äußere Mantelfläche des Abscheidungsraumes gelenkt werden, wodurch dann der Abscheidegrad des Zyklons beträchtlich zunimmt.

Demgemäß geht die Erfindung von einem Enstauberzyklon aus, der in an sich bekannter Weise ein einen Abscheidungsraum umschließendes Zyklongehäuse, in welches ein Einlauf tangential mündet und aus welchem koaxial ein Auslaß in Form eines in den Abscheidungsraum hineinragenden Tauchrohres ausmündet, und einen zwischen dem Einlauf und dem Tauchrohr zur Achse (24) des Tauchrohres (18) parallel ausgebildeten Zutrittsspalt aufweist, dessen radial äußere Begrenzungswand aus der dem Tauchrohr benachbarten Wand des Einlaufs besteht und der in den Abscheidungsraum mündet. Gemäß der Erfindung ist die radial innere Begrenzungswand des Zutrittsspaltes (22) aus der Außenwandung des Tauchrohres (18) gebildet und der Zutrittsspalt (22) zur Umgebung hin offen. Wie dies nachstehend noch in Einzelheiten gezeigt wird, bewirkt die erfindungsgemäße Ausbildung des Zyklons eine Abnahme der feinen Staubmenge um bis zu 50 %, die bei herkömmlichen Zyklonen ohne Zutrittspalt in der entweichenden Reinluft zugegen ist.

Zweckmäßigerweise verläuft die dem Tauchrohr zugekehrte, den Zutrittsspalt begrenzende Wand des Einlaufs wie bei dem Zyklon nach der DE-B-1 292 478 zur Achse des Zyklonkörpers und des Tauchrohres parallel. Dann kann nämlich die Ausbildung des Zutrittsspaltes für die sekundäre Luft zwischen Einlauf und Tauchrohr einfach bewerkstelligt werden, wobei hinter dem Zutrittsspalt ein strömungstechnisch vorteilhafter Saugraum entsteht.

Gemäß Versuchen kann der Abscheidegrad noch weiter erhöht werden, wenn neben dem Zutrittsspalt zwischen Tauchrohr und Einlauf in an sich bekannter Weise im Tauchrohr eine Öffnung ausgebildet wird, die den Entladeraum im Tauchrohr mit einem ringförmigen Teil des Abscheidungsraumes zwischen Tauchrohr und Zyklonkörper verbindet. Die aus dem Umgebungsraum bei hoher Geschwindigkeit eintretende Sekundärluft bewirkt nämlich in der Umgebung der im Tauchrohr ausgebildeten Öffnung eine Saugwirkung, durch die ein beträchtlicher Teil des an der Innenwand des Tauchrohres angereicherten Staubes aus dem Entladeraum im Tauchrohr wieder in den Abscheidungsraum des Zyklons zurückgesaugt und erneut dem Abscheidevorgang unterzogen wird.

Es ist ferner zweckmäßig, wenn die dem Tauchrohr zugekehrte Wand des Einlaufs und der Zutrittsspalt zwischen Tauchrohr und Einlauf in der Richtung der Achse des Zyklongehäuses und des Tauchrohres gleich lang sind. Die durch die Öffnung im Tauchrohr hindurchtretende Luftströmung, die aus dem Entladeraum im Tauchrohr in den Abscheidungsraum im Zyklongehäuse gerichtet ist, wird nämlich, wie erwähnt, durch die Saugwirkung der Sekundärluft herbeigeführt, die mit hoher Geschwindigkeit durch den Zutrittsspalt im Zyklongehäuse hindurch eintritt. Wäre die Abmessung des Spaltes größer als die gleichgerichtete Abmessung der Öffnung, so könnte die Saugwirkung der dem Zyklon zugeführten Sekundärluft nicht voll ausgenützt werden. Wenn dagegen die Abmessung des Spaltes geringer wäre, als die gleichgerichtete Abmessung der Öffnung im Tauchrohr, so entstünde über den überstehenden Teil der Öffnung eine Zuströmung aus dem Abscheidungsraum, so daß weniger Staub von der inneren Mantelfläche des Tauchrohres bzw. aus dem Entladeraum in den Abscheidungsraum des Zyklons zurückbefördert werden würde. Hinzu käme, daß ein Teil der über den Einlauf zugeführten staubigen Primärluft durch den überstehenden Teil der Öffnung hindurch bei Umgehung des Abscheidungsraumes entweichen und die Zunahme des Abscheidegrades in unerwünschter Weise vermindern würde.

In vorteilhafter Weise weist die dem Tauchrohr zugekehrte Wand des Einlaufs einen kreisbogenförmig gekrümmten Fortsatz auf, der als Leitschaufel in den Abscheidungsraum hineinragt. Dann verhindert nämlich die Strömung zwischen der Leitschaufel und der äußeren Mantelfläche des Tauchrohres, daß entlang der letzteren eine unerwünschte Strömung entsteht, die über die Öffnung im Tauchrohr aus dem Abscheidungsraum des Zyklons in den Entladeraum im Tauchrohr gerichtet wäre.

Es ist auch zweckmäßig, die Öffnung im Tauchrohr innerhalb des Umfanges des Tauchrohres auszubilden. Dies kann z. B. durch Einbiegung eines Teils der Tauchrohrwand erreicht werden. Auf diese Weise kann der an der Tauchrohrinnenwand angereicherte Staub ohne Richtungsänderung bei Beibehaltung seiner kinetischen Energie in den Abscheidungsraum des Zyklons zurückgeleitet werden. Dadurch wird auch erreicht, daß die Strömung im Abscheidungsraum ungestört bleibt.

Die Erfindung wird anhand der Zeichnung erläutert, die ein Ausführungsbeispiel des erfindungsgemäßen Zyklons darstellt.

Figur 1   ist eine Vorderansicht des Ausführungsbeispiels,
Figur 2   stellt eine Draufsicht des Zyklons gemäß Fig. 1 dar,
Figur 3   zeigt einen Schnitt gemäß der Linie III-III in Fig. 1,
Figur 4   ist eine Vergrößerung des durch einen Kreis angegebenen Teiles in Fig. 3.

In der Zeichnung ist mit 10 das Gehäuse eines Entstauberzyklons gemäß der Erfindung bezeichnet, das in an sich bekannter Weise aus einem oberen zylindrischen Teil 10a und einem sich nach unten verjüngenden unteren konischen Teil 10b besteht. Beide Teile 10a und 10b umschließen einen Abscheidungsraum 12. Am unteren Teil 10b ist ein Halterungsring 14 angebracht. Der untere Teil 10b endet in einem Flansch 16 mit einer Austrittsöffnung 16a, über die der Zyklonkörper 10 z. B. an eine Entladevorrichtung mit Luftabschluß angeschlossen werden kann, wie dies bei Zyklonen allgemein üblich und deshalb in der Zeichnung nicht dargestellt ist.

Im oberen Teil 10a des Zyklongehäuses 10 ist ebenfalls in an sich bekannter Weise ein zentrales Tauchrohr oder Austrittsrohr 18 angebracht, das zum Abführen von entstaubter Luft dient und sich an den Saugstutzen eines nicht dargestellten Ventilators anschließt. Ein tangentialer Lufteintrittsstutzen oder Einlauf 20 ist bestimmt, staubhaltige Luft dem Abscheidungsraum 12 zuzuführen.

Gemäß der Erfindung ist nun zwischen dem Tauchrohr 18 und der diesem zugekehrten Wand 20a des Einlaufs 20 ein zur Außenseite des Zyklons hin offener Zutrittsspalt 22 vorgesehen, der daher an der radial inneren Seite der durch den Einlauf eintretenden Eintrittsströmung in den Abscheidungsraum 12 mündet. Dies hat bereits zur Folge, daß Staubkörnchen in der durch den Einlauf 20 eintretenden Primärluft durch die über den Zutrittsspalt 22 hereinströmende Sekundärluft unter Erhöhung des Abscheidegrades gegen die Wand des Abscheidungsraumes 12 gelenkt werden.

Beim dargestellten Ausführungsbeispiel verläuft die dem Tauchrohr 18 zugekehrte Wand 20a des Einlaufs 20 parallel zur Achse 24 des Tauchrohres 18 mit der Folge, daß einerseits der Zutrittsspalt 22 einfach ausgebildet werden kann und andererseits Tauchrohr 18 und Einlauf 20 miteinander einen strömungstechnisch vorteilhaften Saugraum stromabwärts vom Spalt 22 bilden.

Ebenfalls bei der dargestellten Ausführungsform des erfindungsgemäßen Zyklons ist ferner in der Wand des Tauchrohres 18 eine Öffnung 26 vorgesehen, die den Entladeraum 28 im Tauchrohr 18 mit dem das Tauchrohr umgebenden ringförmigen Teil 12a des Abscheidungsraumes 12 verbindet. Die durch die über den Zutrittsspalt 22 eintretende Sekundärluft bedingte Saugwirkung im Bereich der Öffnung 26 gewährleistet, daß die an der inneren Mantelfläche des Tauchrohres 18 noch eventuell angereicherten Staubteilchen in den Abscheidungsraum 12 zurückgelangen und wiederholt dem Abscheidungsvorgang unterzogen werden, was eben eine doppelte Abscheidung des Staubes in demselben Zyklon 10 bedeutet.

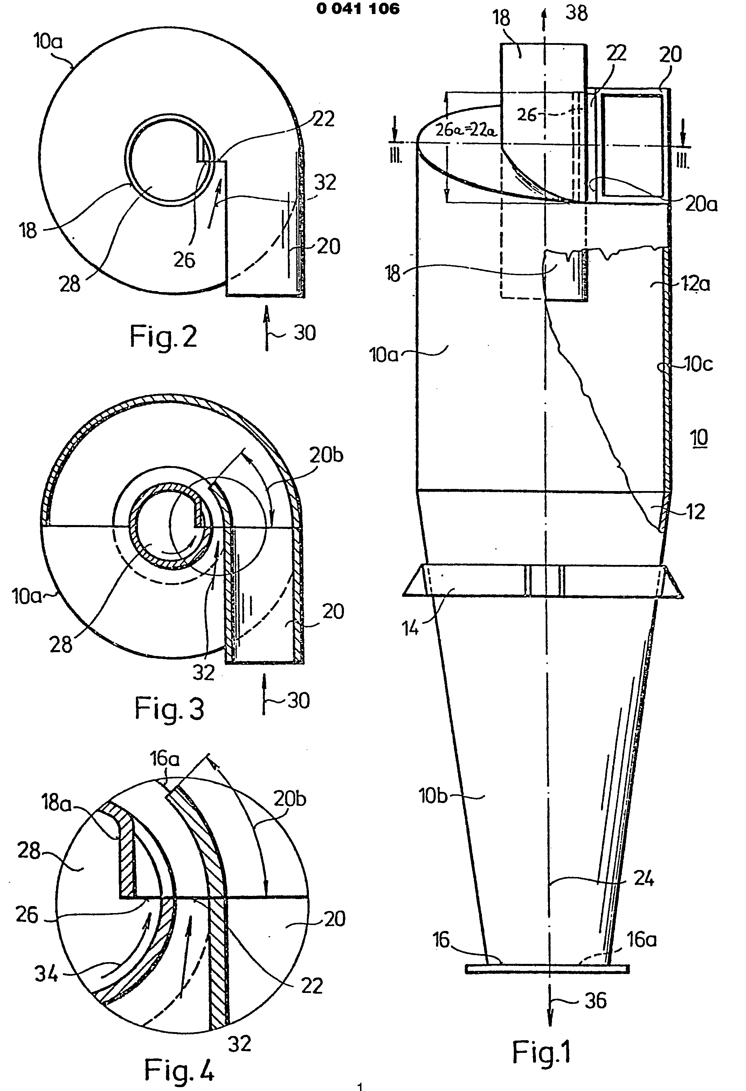

Es ist auch aus Fig. 1 ersichtlich, daß beim dargestellten Ausführungsbeispiel die zur Achse 24 des Tauchrohres 18 parallele Abmessung 26a der Öffnung 26 im Tauchrohr 18 der gleichgerichteten Abmessung 22a des Zutrittsspaltes 22 gleich ist. Dies gewährleistet eine volle Ausnützung der Saugwirkung der sekundären Luftströmung entlang der ganzen Höhe der Öffnung 26.

Beim dargestellten Ausführungsbeispiel weist ferner die dem Tauchrohr 18 zugekehrte Wand 20a des Einlaufs 20 eine in den Abscheidungsraum 12 des Zyklons verlängerte, entlang den Stromlinien der durch den Einlauf 20 eintretenden Primärluft verlaufende Leitschaufel 20b auf, die im Abstand vom Umfang des Tauchrohres 18 verläuft und sich mit der Öffnung 26 im Tauchrohr 18 überlappt. Dadurch wird verhindert, daß über die Öffnung 26 eventuell eine Strömung aus dem Abscheidungsraum 12 unmittelbar in den Entladeraum 28 im Tauchrohr 18 entsteht und den Abscheidegrad des Entstaubungsvorganges verringert.

Die Öffnung 26 im Tauchrohr 18 ist übrigens bei der dargestellten Ausführungsform des erfindungsgemäßen Zyklons innerhalb des Umfanges des Tauchrohres 18 vorgesehen, indem ein Teil 18a der Tauchrohrwand nach innen abgebogen ist, so daß die Mündungsflächen der Öffnung 26 und des Zutrittsspaltes 22 in derselben, die Zyklonachse 24 enthaltenden Radialebene liegen und entsprechend den Pfeilen in Fig. 4 gleichsinnige Durchtrittsströmungen durch die Öffnung 26 und den Spalt 22 entstehen. Auf diese Weise gelangt die Staubschicht an der inneren Mantelfläche des Tauchrohres 18 ohne Richtungsänderung und somit ohne Energieverlust in den Abscheidungsraum 12 des Zyklons zurück. Außerdem wird die Strömung im Abscheidungsraum 12 des Zyklons durch die Öffnung 26 im Tauchrohr 18 nicht gestört, wie dies bereits angegeben worden ist.

Das dargestellte Ausführungsbeispiel des Zyklons gemäß der Erfindung arbeitet wie folgt :

Die durch den nicht dargestellten Ventilator angesaugte staubhaltige Luft strömt in an sich bekannter Weise in der durch einen Pfeil 30 angegebenen Richtung in den Einlauf 20 und über diesen in den Abscheidungsraum 12 des Zyklons. Dabei werden die in der eintretenden Primärluft schwebenden Staubteilchen im Sinne der Erfindung durch die über den Zutrittsspalt 22 aus dem Umgebungsraum angesaugte und durch einen Pfeil 32 angedeutete Sekundärluft an die äußere Wandfläche 10c des Zyklons gelenkt, so daß im ringförmigen Teil 12a des Abscheidungsraumes 12 die Abscheidung in Gang gesetzt wird.

Die Strömung der Sekundärluft zwischen Tauchrohr 18 und Leitschaufel 20b übt dabei eine Saugwirkung auf die unmittelbar neben dem Zutrittsspalt 22 gelegene Öffnung 26 aus, so daß die aus dem Tauchrohr 18 angesaugte Luft ebenfalls an die Wandfläche 10a des Zyklons gelenkt wird.

Wie bekannt, entsteht im Abscheidungsraum 12 eine Wirbelsenke, indem die zuströmende staubhaltige Primärluft zusammen mit der aus dem Umgebungsraum angesaugten Sekundärluft in eine Kreisbewegung umgelenkt wird und im äußeren Rotationsbereich schraubenförmig nach unten strömt. Die Teilchen des in der angesaugten Primärluft schwebenden Staubes werden dabei durch die entstehende Zentrifugalkraft aus dem Drall in die wandnahe Zone getragen und mit der Abwärtskomponente der Strömung nach unten zur Austrittsöffnung 16a im Flansch 16 befördert, wie dies durch einen Pfeil 36 angegeben ist.

Die in der Achse 24 des Zyklons aufsteigende Trombe der in einer ersten Stufe gereinigten Luft gelangt ebenfalls in an sich bekannter Weise in das Tauchrohr 18. Hier wird ihre äußere Schicht, in der die noch zurückgebliebenen Staubteilchen infolge der aus der Kreisbewegung stammenden Zentrifugalkraft angesammelt sind, durch den nach innen abgebogenen Teil 18a der Tauchrohrwand abgeschieden und in den Abscheidungsraum 12 zurückgelenkt. Auf diese Weise wird eine zweifache Abscheidung der staubhaltigen Primärluft mittels eines einzigen Zyklons erreicht.

Die Reinluft entweicht aus dem Entladeraum 28 im Tauchrohr 18 in der durch einen Pfeil 38 angegebenen Richtung.

Die Wirksamkeit des oben beschriebenen Abscheidungsvorganges konnte durch Versuche bestätigt werden.

Vor allem konnte festgestellt werden, daß die Mengen der Sekundärluft und der über die Öffnung 26 in den Abscheidungsvorgang zurückgeleitete Luft im Verhältnis zu der durch den Einlauf 20 hindurch zuströmenden Primärluft praktisch unerheblich sind. Dies bedeutet, daß mit nur geringem Mehrbedarf an Energie gerechnet werden kann.

Es ergaben sich u. a. folgende Versuchswerte :

| | |
|---|---|
| Art des Staubes | Quarzstaub DIN 80 |
| Staubbeladung | 10 g/m³ |
| Eintrittsgeschwindigkeit | 17 m/s |
| Durchflußmenge | 1 000 m³/h |
| Abscheidegrad bei herkömmlichen Zyklonen ohne Spalt 22 und Öffnung 26 | 89,5 % |
| Abscheidegrad bei erfindungsgemäßen Zyklonen nur mit Spalt 22 | 93 % |
| Abscheidegrad bei erfindungsgemäßen Zyklonen mit Spalt 22 und Öffnung 26 | 95,2 % |

Der herkömmliche Zyklon mit dem verhältnismäßig geringen Abscheidegrad von 89,5 % ist gewählt worden, um einen möglichst breiten Meßbereich zu erlangen.

Laboratoriumsmessungen haben gezeigt, daß der Staubgehalt der entweichenden Reinluft im Verhältnis zu herkömmlichen Zyklonen durch die erfindungsgemäße Ausbildung des Zyklons um bis 26 50 % verringert werden konnte.

Ein weiterer Vorteil der Erfindung besteht auch darin, daß bereits bestehende Zyklone verhältnismäßig einfach in erfindungsgemäße Zyklone umgebaut werden können, wodurch dann ihre Abscheidegrade sich beträchtlich erhöhen. Es handelt sich ja nur darum, zwischen Einlauf und Tauchrohr einen Spalt auszubilden bzw. das Tauchrohr mit einer Öffnung, etwa wie oben beschrieben, zu versehen.

Durch Anwendung der Erfindung wird auch das Verwendungsgebiet von billigen und einfachen Zyklonen wesentlich erweitert, weil sie dann geeignet sind, insbesondere ökologische Forderungen ohne wesentlichen Mehrverbrauch an Energie zu befriedigen.

Im obigen ist die Erfindung an einer Ausführungsform beschreiben worden, die mit einem Saugventilator betrieben wird. Es ist leicht einzusehen, daß Druckventilatoren sinngemäß ebenfalls verwendet werden können.

Wie aus der Zeichnung ersichtlich, hat der Einlauf 20 bevorzugt einen rechteckigen Querschnitt, dessen dem Tauchrohr zugekehrte Rechteckseite, d. i. die Wand 20a, parallel zur Tauchrohrachse verläuft und am Schnittpunkt mit der die Mündungsflächen der Öffnung 26 und des Zutrittsspaltes 22 enthaltenden Ebene um die senkrecht zur Tauchrohrachse gemessene Breite des Spaltes 22 in geringem Abstand zum Außenumfang des Tauchrohres 18 angeordnet ist (Fig. 3 und 4). Der Mündungsquerschnitt des Einlaufes liegt daher i. w. ebenfalls in einer die Achse 24 des Zyklons enthaltenden Ebene.

**Ansprüche**

1. Entstauberzyklon mit einem dessen Abscheidungsraum (12) umschließenden Zyklongehäuse (10), in welches ein Einlauf (20) tangential einmündet und aus welchem koaxial ein Auslaß in Form eines in den Abscheidungsraum (12) hineinragenden Tauchrohres (18) ausmündet, und mit einem zwischen dem Einlauf (20) und dem Tauchrohr (18) zur Achse (24) des Tauchrohres (18) parallel ausgebildeten Zutrittsspalt (22), dessen radial äußere Begrenzungswand aus der dem Tauchrohr (18) benachbarten Wand (20a) des Einlaufs (20) besteht und der in den Abscheidungsraum (12) mündet, dadurch gekennzeichnet, daß die radial innere Begrenzungswand des Zutrittsspaltes (22) aus der Außenwandung des Tauchrohres (18) besteht und daß der Zutrittsspalt (22) zur Umgebung hin offen ist.

2. Entstauberzyklon nach Anspruch 1, dadurch gekennzeichnet, daß in der Wand des Tauchrohres (18) neben dem Zutrittsspalt (22) eine von dem Sekundärluftstrom, der durch den Zutrittsspalt (22) in den Abscheidungsraum (12) eintritt, überstrichende Öffnung (26) ausgebildet ist und daß die Öffnung (26) und der Zutrittsspalt (22) in Richtung parallel zur Zyklonachse (24) gleichlang sind.

3. Entstauberzyklon nach Anspruch 2, dadurch gekennzeichnet, daß die dem Tauchrohr (18) benachbarte Wand (20a) des Einlaufs (20) durch eine entlang den Stromlinien des durch den Einlauf (20) in den Abscheidungsraum (12) eintretenden Primärluftstromes gekrümmt verlaufende, in den Abscheidungsraum (12) hineinragende und sich mit der Öffnung (26) in der Wand des Tauchrohres (18) überlappende Leitschaufel (20b) verlängert ist.

4. Entstauberzyklon nach einem der Ansprüche 1 bis 3, dadurch gekennzeichnet, daß die Spaltebene des Zutrittsspaltes (22) in einer die Zyklonachse (24) enthaltenden Radialebene des Zyklongehäuses (10) liegt.

5. Entstauberzyklon nach den Ansprüchen 2 und 4, dadurch gekennzeichnet, daß die dem Innenraum (28) des Tauchrohres (18) zugekehrte Mündungsebene der in der Wand des Tauchrohres (18) ausgebildeten Öffnung (26) innerhalb des Umfangs des Tauchrohres (18) in der die Spaltebene des Zutrittsspaltes (22) und die Zyklonachse enthaltenden Radialebene des Zyklongehäuses (10) für eine zu dem Sekundärluftstrom, der durch den Zutrittsspalt (22) in den Abscheidungsraum (12) eintritt, gleichsinnige Durchtrittsströmung durch die Öffnung (26) ausgebildet ist.

**Claims**

1. Dust separating cyclone comprising a cyclone housing (10) surrounding the dust separation space (12) of the cyclone, an inlet (20) opening tangentially into the housing from which exits coaxially an outlet in the form of a dip pipe (18) projecting into the separation space (12), and an entry gap (22) formed parallel to the axis (24) of the dip pipe (18) between the inlet (20) and the dip pipe (18), the gap having an outer boundary wall formed by the adjacent wall (20a) of the inlet (20) and opening into the separating space (12), characterised in that the radially inner boundary wall of the entry gap (22) is formed by the outer wall of the dip pipe (18) and that the entry gap (22) is open towards the environment.

2. Dust separating cyclone according to claim 1, characterised in that an aperture (26) is formed in the wall of the dip pipe (18) next to the entry gap (22), secondary air stream entering through the entry gap (22) and streaming into the separation space (12) flowing across the aperture and in that the lengths of the aperture (26) and of the entry gap (22) in a direction parallel to the axis of the cyclone (24) are equal.

3. Dust separating cyclone according to claim 2, characterised in that the wall (20a) of the inlet (20) adjacent the dip pipe (18) is elongated by a guide vane (20a) that overlaps the aperture (26) in the wall of the dip pipe (18) and extends curved along the stream lines of the flow of the primary air stream entering into the separation chamber (12).

4. Dust separating cyclone according to one of claims 1 to 3, characterised in that the opening plane of the entry gap (22) lies in the radial plane of the cyclone housing (10) containing the axis (24) of the cyclone.

5. Dust separating cyclone according to claims 2 and 4, characterised in that the plane of the opening of the aperture (26) formed in the dip pipe (18) that faces the interior (28) of the dip pipe (18) is formed within the periphery of the dip pipe (18) coplanarly with the plane of the entry gap (22) and with the radial plane of the cyclone housing (10) containing the axis of the cyclone for the purpose of through-flow through the aperture (26) in the same direction as that of the secondary air stream entering into the separation space (12) through the entry gap (22).

**Revendications**

1. Cyclone de dépoussiérage dont la chambre de séparation (12) est entourée d'un corps de cyclone (10) dans lequel débouche tangentiellement une entrée (20) et d'où sort coaxialement une sortie sous la forme d'une tube plongeur (18) faisant saillie dans la chambre de séparation (12) et avec un intervalle d'entrée (22) qui est formé parallèlement à l'axe (24) du tube plongeur (18) entre l'entrée (20) et le tube plongeur (18) et dont la paroi de séparation extérieure radiale se compose de la paroi (20a) de l'entrée (20) voisine du tube plongeur (18) et qui débouche dans la chambre de séparation (12), caractérisé en ce que la paroi de séparation intérieure radiale de l'intervalle d'entrée (22) se compose de la paroi extérieure du tube plongeur (18) et en ce que l'intervalle d'entrée (22) est ouvert sur le milieu qui l'entoure.

2. Cyclone de dépoussiérage selon la revendication 1, caractérisé en ce que dans la paroi du tube plongeur (18), à côté de l'intervalle d'entrée 22, est formée une ouverture (26) traversée par l'air secondaire qui entre dans la chambre de séparation (12) par l'intervalle d'entrée (22) et en ce que l'ouverture (26) et l'intervalle d'entrée (22) présentent la même longueur dans la direction parallèle à l'axe (24) du cyclone.

3. Cyclone de dépoussiérage selon la revendication 2, caractérisé en ce que la paroi (20a) de l'entrée (20) voisine du tube plongeur (18), est prolongée par un aubage de guidage (20b) qui guide de façon incurvée les lignes d'écoulement du flux d'air primaire entrant par l'entrée (20) dans la chambre de séparation (12), qui fait saillie dans la chambre de séparation (12) et qui recouvre l'ouverture (26) dans la paroi du tube plongeur (18).

4. Cyclone de dépoussiérage selon l'une des revendications 1 à 3, caractérisé en ce que le plan de séparation de l'intervalle d'entrée (22) se trouve dans un plan radial du corps de cyclone (10) contenant l'axe (24) du cyclone.

5. Cyclone de dépoussiérage selon les revendications 2 et 4, caractérisé en ce que le plan du débouché de l'ouverture (26) formée sur la paroi du tube plongeur (18), du côté opposé à l'espace intérieur (28) du tube plongeur (18), est formé à l'intérieur de la périphérie du tube plongeur (18) dans le plan radial du corps du cyclone (10) contenant le plan de séparation de l'intervalle d'entrée (22) et l'axe du cyclone pour un écoulement traversant de même sens par l'ouverture (26), de l'air secondaire qui pénètre dans l'espace de séparation (12) par l'intervalle d'entrée (22).

Fig.2

Fig.3

Fig.4

Fig.1

1